**Europäisches Patentamt**

**European Patent Office**

**Office européen des brevets**

(11) Veröffentlichungsnummer : **0 285 559 B1**

(12) **EUROPÄISCHE PATENTSCHRIFT**

(45) Veröffentlichungstag der Patentschrift :
06.05.92 Patentblatt 92/19

(21) Anmeldenummer : **88810164.9**

(22) Anmeldetag : **16.03.88**

(51) Int. Cl.⁵ : **G08B 13/24**

(54) **Resonanzetikette und Verfahren zu ihrer Herstellung.**

(30) Priorität : **17.03.87 CH 1000/87**

(43) Veröffentlichungstag der Anmeldung :
**05.10.88 Patentblatt 88/40**

(45) Bekanntmachung des Hinweises auf die
Patenterteilung :
**06.05.92 Patentblatt 92/19**

(84) Benannte Vertragsstaaten :
**AT BE CH DE ES FR GB GR IT LI LU NL SE**

(56) Entgegenhaltungen :
**EP-A- 0 209 816**
**US-A- 4 318 090**

(73) Patentinhaber : **Actron Entwicklungs AG**
**Lettenstrasse 8**
**CH-6343 Rotkreuz (CH)**

(72) Erfinder : **Jorgensen, Paul Richter**
**La Romantica 8 Urb.Los Pinos**
**Almuncear (ES)**

(74) Vertreter : **Lauer, Joachim, Dr.**
**Hug Interlizenz AG Austrasse 44 Postfach**
**CH-8045 Zürich (CH)**

## Beschreibung

Die Erfindung bezieht sich auf eine Resonanzetikette nach dem Oberbegriff des Anspruches 1, sowie auf ein Verfahren zu deren Herstellung.

Resonanzetiketten dienen bekanntlich der Sicherung gegen Diebstahl in Kaufhäusern, Supermärkten u.dgl., sind an der zu schützenden Ware angebracht und müssen an der Kassa deaktiviert werden, um nicht beim Ausgang einen Diebstahlalarm auszulösen. Zum Deaktivieren wird in den einen Schwingkreis darstellenden Resonanzetiketten ein Stromstoss grosser Stärke induziert, der praktisch einen Kurzschluss verursacht (z.B nach US-PS 3 624 631). Hiezu sind enorme Felder erforderlich, die einerseits angesichts der im allgemeinen gegebenen Nähe von Kassa und Ausgang zu unerwünschten gegenseitigen Beeinflussungen und zu Fehlalarmen führen kann und die anderseits auch energieaufwendig sind. Schwachstellen in der Leiterbahn wirken sich auch schädlich auf die Qualität Q des Schwingkreises aus.

Man hat daher in der Vergangenheit versucht, die zur Deaktivierung erforderliche Energie möglichst zu vermindern. Dies geschieht entweder durch einen komplizierten Aufbau der Etikette mit zwei verschiedenen Schwingkreisen (z.B nach US-PS 3 810 147); eine andere naheliegende Massnahme (die auch aus anderen Gründen getroffen wurde) bestand darin, die, meist mit dem Träger identische, Isolierschicht so dünn wie möglich zu gestalten. Hier finden sich allerdings bald Grenzen.

Um daher eine weitere Verminderung der zur Deaktivierung nötigen Energie zu erreichen, wurde gemäss der US-A-4 567 473 vorgeschlagen, nach Fertigstellung der Etikette an einer Stelle eine Kerbe, insbesondere im Bereich der Kondensatorplatten, anzubringen. Eine solche Kerbe in ein nur wenige Hunderstel Millimeter dickes Substrat jeweils mit vorbestimmter Tiefe durchzuführen, ist aber ein auserordentlich schwieriges Unterfangen. Tatsächlich ergaben sich in der Praxis dabei sehr unterschiedliche Spulenqualitäten, weil entweder die leitende Schicht mit dem Schnitt unterschiedlich tief in die Isolierschicht gezogen war, oder - da diese während des Verfahrensablaufes unter Zug steht - den Einschnitt oberflächlich freiliess, so dass erst recht eine höhere Deaktivierungsenergie erforderlich wurde, um einen Funken sozusagen um die Ecke zu ziehen.

Am Markte findet sich daher eine weitere Ausbildung, bei der die Etikette nach ihrer Fertigstellung im Bereiche der einander gegenüberliegenden und nur durch die Isolierschicht getrennten leitenden Schichten ein örtlich begrenzter Druck ausgeübt ist, so dass das Dielektrikum durch die Pressung lokal dünner wird. Im allgemeinen benützt man hiezu eine Prägewalze, die eine Fläche in der Grössenordnung eines Quadratmillimeters zusammenpresst. Hier ergeben sich noch weitere Nachteile: Dickenschwankungen der verschiedenen Schichten der fertigen Etikette haben einen starken Einfluss auf die letzlich erreichte Schwächung des Dielektrikums. Bleibt der Abstand zu gross, so reicht das Deaktivierungsfeld nicht aus, seinen Zweck zu erfüllen. Ist aber der Abstand zu klein, so wird die Etikette gegebenenfalls schon bei der Erkennung im System deaktiviert. Dazu kommt, dass die verhältnismässig grosse geschwächte Fläche bereits einen starken Einfluss auf die Resonanzfrequenz des Schwingkreises besitzt, so dass die Einstellung auf eine vorgegebene Resonanzfrequenz, oder wenigstens auf einen engeren Frequenzbereich erschwert ist. Dies wird noch durch den Umstand verschärft, dass bisher bei solchen Etiketten nur Polyäthylen als Dielektrikum verwendet werden konnte, dessen Dicke relativ hoch ist und im Bereiche von etwa 26 bis 30 $\mu$m liegt, wobei es durch die Prägung auf 5 bis 8 $\mu$m gebracht werden soll.

Andere Materialen, wie Polystyrol oder Polypropylen sind zwar dünner und würden sich für die Kondensatorbildung an sich besser eignen, besitzen aber einen sehr geringen dielektrischen Verlustfaktor, was gerade bei dieser bekannten Etikettenart bei der Deaktivierung zu Problemen führte.

Zusammenfassend lässt sich somit feststellen, dass alle bisherigen Versuche, die zur Deaktivierung nötige Feldstärke durch eine gezielte Schwächung der Isolierschicht zu vermindern, nicht befriedigten, da sie zu höheren Ausschussraten führten. Die obige Schilderung des Standes der Technik zeigt aber auch, dass die Versuche zur Behebung des Problemes mit nicht unbeträchtlicher Intensität durchgeführt wurden, ohne zum Erfolg zu gelangen.

Der Erfindung liegt daher die Aufgabe zugrunde, eine Resonanzetikette der eingangs genannten Art so auszugestalten, dass einerseits eine deutliche Verminderung der zur Deaktivierung nötigen Feldstärke erhalten wird, dass anderseits die Deaktivierung fehlerfrei und dauerhaft erreicht wird, und dass womöglich auch der Einfluss auf die Resonanzfrequenz begrenzt, bzw. vorhersehbar bleibt.

Die Lösung dieser Aufgabe gelingt überraschend einfach durch die kennzeichnenden Merkmale des Anspruches 1. Bevorzugte Ausführungsformen sind in den Kennzeichen der Unteransprüche beschrieben. Durch die Anordnung eines durchgehenden Schnittes oder Loches (es können auch mehrere, beispielsweise zwei oder drei sein) in der Isolierschicht wird eine örtlich begrenzte, jedoch definierte Inhomogenität eingebaut, d.h. die dielektrische Konstante wird in einem definierten Bereich wesentlich verändert und geht beispielsweise von einem Wert von 2,3 bis 2,5 auf 1 (für Luft) zurück. Durch die Lochung (im Sinn der Erfindung ist im folgenden unter "Loch" oder "Lochung" immer auch ein Schnitt zu verstehen) ist der Entladung ein klarer Weg vorgeschrieben, sie muss sich nicht - wie bisher - erst einen Weg durch die Molekularstruktur bahnen, denn der Deaktivierungsfunke nimmt den kürzesten Weg zwischen den beiden einander gegenüberliegenden leitenden Schichten, bzw. den mit dem ge ringsten elektrischen Widerstand. Einflüsse, wie Dickenschwankungen - wie beim bekannten Prägen - gibt es nicht. Das Schneiden oder Lochen ist aber auch insoferne mit den bisherigen Methoden nicht vergleichbar, als sich in der Praxis zeigt, dass das Deaktivieren viel sicherer als bisher erfolgt, d.h. es kann nicht mehr vorkommen, dass die Etikette nach dem Deaktivierungsstromstoss noch resonanzfähig bleibt, und dies trotz deutlich verminderter Deaktivierungs-Stromstärke. Dieses Ergebnis erschien bei ersten Versuchen verblüffend, und erst Schnitte durch das Material zeigten, dass die leitende Schicht jeweils in dem Loche verdampft und entlang der Lochwand einen gleichmässigen Belag bildet, der für einen dauernden Kurzschluss sorgt. Diese Verbindung ist dermassen fest und sicher, dass sie auch durch Bewegungen und Walkarbeit - etwa beim Einbau der Etikette in eine Schuhsohle - nicht abreisst, was nämlich bei der oft unregelmässigen und dünnen Funkenstrecke geschehen konnte, die sich beim Kurzschluss durch eine, nur durch einen Einstich oder durch Prägung kürzer gewordene Dielektrikumstrecke ergibt.

Ein weiterer Vorteil liegt darin, dass nun auch diejenigen Materialien verwendet werden können, die bisher beim Deaktivieren Schwierigkeiten bereiteten, nämlich Polypropylen und Polystyrol, ebenso wie das billige Polyäthylen, das nun schon beim Aufbau der Resonanzetikette mit geringer Dicke vorgesehen werden kann.

Es hat sich gezeigt, dass unter bestimmten Voraussetzungen z.B. schon die doppelte Stromstärke der zur Erregung notwendigen ausreicht, um eine Deaktivierung durchzuführen, insbesondere wenn Anspruch 3 verwirklicht ist. An sich ist es nämlich auch möglich, wenigstens eine leitende Schicht zu perforieren, deren Lochränder dann ohne dazwischenliegendem Dielektrikum der anderen Schicht (oder deren Lochrändern) gegenüberliegen. Es muss dabeinur dafür gesorgt werden, dass sich beim Perforieren keine Metallbrücken quer durch das Loch ergeben. Durch die Er wärmung der Loch-Werkzeuge schrumpft das Dielektrikum sogar nach dem Lochen geringfügig, so dass sich im Bereich des Loches die leitenden Schichten (z.B. Aluminium) gegenüberliegen.

Bei Resonanzetiketten spielt der sogenannte "Q-Faktor" eine wichtige Rolle, der nicht nur von der Qualität des Dielektrikums abhängt, sondern auch von dem von leitender Beschichtung freien Raum innerhalb der Induktorwicklung. Bei vorgegebener Länge der Leiterbahnen des Induktors wird dieser Freiraum meist noch durch den darin unterzubringenden Kondensator verkleinert. Je kleiner die Kondensatorfläche daher sein kann (auf Grund eines möglichst dünnen Dielektrikums), um so grösser ist dieser Freiraum und damit die Güte der Etikette. Dieser Q-Faktor sinkt allerdings ab, wenn die Lochfläche zu gross gewählt wird. Anderseits wird die Deaktivierung durch ein möglichst deutliches Loch erleichtert. Hier ergeben sich also einander widersprechende Forderungen, die am besten durch die Merkmale der Ansprüche 4, 5 und/oder 6 gelöst werden.

Zur Herstellung der erfindungsgemässen Etikette sind die Merkmale des Anspruches 7 vorgesehen.

Weitere Einzelheiten der Erfindung ergeben sich an Hand der nachfolgenden Beschreibung je eines in der Zeichnung schematisch dargestellten Ausführungsbeispieles zur Veranschaulichung der erfindungsgemässen Resonanzetikette und des Verfahrens zu ihrer Herstellung. Demgemäss zeigen:

Fig.1 eine erfindungsgemässe Resonanzetikette in einer explodierten Perspektivansicht;

Fig.2 ein Schema zur Veranschaulichung des erfindungsgemässen Verfahrens bzw. einer Vorrichtung zur Durchführung dieses Verfahrens in Seitenansicht und einer Nadel-, bzw. Messerwalze im Schrägriss; und die

Fig.3 und 4 zwei Ausführungsvarianten hiezu; und die

Fig.5 und 6 einen Schnitt durch eine Resonanzetikette während und nach ihrer Herstellung.

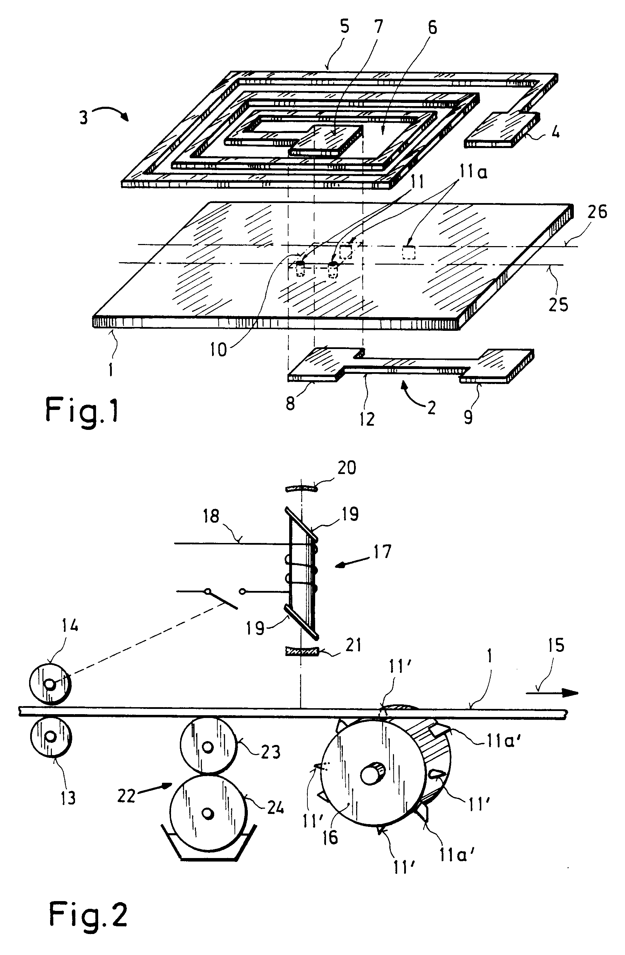

Die in Fig.1 explodiert dargestellte Resonanzetikette weist ein isolierende Trägerschicht 1 auf, auf deren einer Seite eine leitende Schicht 2, auf der anderen, gegenüberliegenden Seite ein leitende Schicht 3 aufgebracht ist. Die Art der Aufbringung und die Ausbildung des Musters, insbesondere der Schicht 3, kann in an sich bekannter Weise erfolgen und braucht daher hier nicht näher beschrieben zu werden.

Für die Erläuterung der Funktion ist lediglich zu erwähnen, dass die leitende Schicht 3 im Anschluss an eine Kontaktplatte 4 die Windungen eines Induktors 5 aufweist, die einen Freiraum 6 umschliessen. Dieser Freiraum 6 wird allerdings durch eine mit dem Induktor 5 verbundene Kondensatorplatte 7 verkleinert.

Der Kondensatorplatte 7 genau gegenüberliegend weist die leitende Schicht 2 eine entsprechende Kondensatorplatte 8 auf, die ebenfalls an eine Kontaktfahne 9 angeschlossen ist. Induktor 5 und Kondensator 7,8 bilden zusammen in bekannter Weise einen Schwingkreis mit vorbestimmter Resonanzfrequenz. Dabei dient die Isolierschicht 1 als die Frequenz mitbestimmendes Dielektrikum, das in einem Bereich 10 die beiden Kondensatorplatten 7,8 voneinander trennt. Die Kontaktplatten 4,9 werden zweckmässig durch Krimpen miteinander verbunden.

Die bisher beschriebenen Teile sind herkömmlicher Natur und mögen an sich beliebig abgewandelt weden. Unterschiedlich zum Stande der Technik ist jedoch, dass die Isolerischicht 1 wenigstens ein durchgehendes Loch 11 in einem Bereich besitzt, in dem die beiden leitenden Schichten 2,3 einander gegenüberliegen. Es könnte dies auch im Bereiche der (bezüglich Fig.1) rechten Windungen des Induktors 5 einerseits und des die Kondensatorplatte 8 mit der Kontaktplatte 9 verbindenden Steges 12 anderseits sein. Bevorzugt ist jedoch das Loch 11 im Bereiche 10 zwischen den Kondensatorplatten 7 und 8 angeordnet.

Hier sei noch erwähnt, dass an Stelle mehrerer Löcher 11 auch nur eines davon vorgesehen sein könnte, doch ist es zur Vermeidung einer starken Beeinflussung des Q-Faktors zweckmässig, die von der Gesamtheit der Löcher eingenommene Querschnittsfläche nicht allzugross werden zu lassen. Gerade aber bei solchen Perforationen ist es viel leichter, die von diesen eingenommene Fläche gering zu halten, als im Falle einer Prägung. Vorteilhaft liegt deshalb die Lochdiagonale (d.i. im Falle eines runden Loches der Durchmesser) im Bereiche unter 1 mm, ja sollte zweckmässig sogar maximal 0,5 mm erreichen. In der Praxis kommt man jedoch mit weit geringeren Durchmessern des Loches 11 aus; es genügt ein Lochdurchmesser von 0,1 mm, in den meisten Fällen von 10 bis 20 μm. Diese Durchmesserwerte entsprechen einer Lochfläche von maximal 0,75 mm2, insbesondere von maximal 0,03 mm2. Werte von 0,0003 bis 0,0006 mm2 sind dabei durchaus realistisch.

Diese Bemessung spielt eine besondere Rolle dann, wenn das durchgehende Loch in Form eines Einschnittes 11a eingebracht wird, der in der Breitendimension vernachläsigbar schmal ist, so dass die Längendimension entsprechend grösser sein kann, um auf die oben genannten Lochflächen zu kommen. Ein Schnitt wird sich aus produktionstechnischen Gründen in vielen Fällen empfehlen, da er mit einer Messerwalze relativ leicht herstellbar ist. Gewünschtenfalls kann er auch quer zur aus Fig.1 ersichtlichen Längserstreckung verlaufen, doch ist die dargestellte Ausrichtung der Schnitte 11a in Längsrichtung des Etikettenbandes (es schliessen sich links und rechts vor dem Abtrennen der einzelnen Etikette weitere Etiketten an) bevorzugt.

Wie aus Fig.1 ersichtlich ist, verlaufen die Löcher 11 bzw. die Schnitte 11a entlang von strich-punktierten Linien 25,26, entlang derer sie sich periodisch wiederholen, wie dies einer vor teilhaften Ausführung entspricht. Der Grund hiefür wird später erläutert, doch sei hier erwähnt, dass die Löcher 11, bzw. 11a in jenen Bereichen, in denen einer leitenden Schicht 2, bzw. 3 auf der einen Seite der Isolierschicht 1 an der anderen Seite keine leitende Schicht gegenüberliegt, keinerlei Nachteil bewirken, dass aber die Herstellung mit dieser Anordnung erleichtert wird, wie noch gezeigt werden soll.

Man kann natürlich die Gesamtquerschnittsfläche trotz gering gehaltenem Lochdurchmesser auch dadurch vergrössern, dass mehrere solcher Löcher 11 vorgesehen sind (siehe Fig.1), beispielsweise zwei oder drei, welche Beschränkung sich auch im Hinblick auf den Erhalt einer ausreichenden Festigkeit der Etikette empfiehlt. In diesem Falle ist es aber günstig, den Abstand zwischen einander benachbarten Löchern nicht allzu klein zu wählen. Es wurde gefunden, dass ein Abstand von 3 mm eher die unterste Grenze darstellt, besser noch von 5 mm. Ein Abstand von 10 mm empfiehlt sich besonders. Es ist klar, dass dann wohl nicht alle Löcher im Bereiche 10 untergebracht werden können, und daher zumindest eines zwischen Induktor 5 und Steg 12 angeordnet werden muss, wenn nicht der Kondensator 7,8 gross genug ist,zwei solcher Löcher an ihren Diagonalen anzubringen.

Selbstverständlich ist die Erfindung keineswegs auf die dargestellte Ausführung beschränkt, denn es wäre ebenso möglich, auf einer Trägerschicht einseitig erst eine leitende Schicht 3 und dann - nach Aufbringen einer relativ kleinflächigen Isolierschicht - die Schicht 2 aufzubringen. In jedem Falle wird sich aber durch den Deaktivierungsstromstoss, der - wie erwähnt -erheblich kleiner als bisher sein kann, eine leitende Auskleidung im Inneren des Loches ergeben, die die beiden leitenden Schichten 2,3 miteinander dauerhaft verbindet, so dass Fehlalarme durch Unterbrechung des geschaffenen Kurzschlusses ausgeschlossen sind.

Fig.2 veranschaulicht anhand einer einzigen Zeichnung zwei verschiedene Möglichkeiten zur Anbringung der erfindungsgemässen Löcher in der Isolierschicht 1. Dies kann zwar auch nach dem Aufbringen der leitenden Schichten 2,3 (Fig.1) geschehen, wird aber vorzugsweise vor deren Aufbringen erfolgen, um auch diejenigen Probleme zu vermeiden, die eingangs beim Stand der Technik hinsichtlich der fehlenden Ueberdeckung des Einschnittes durch die leitende Schicht erwähnt wurden.

Die Isolerischicht 1 wird zwischen einem Walzenpaar 13,14 in Richtung des Pfeiles 15 gezogen, um anschliessend (nicht dargestellt) der weiteren Verarbeitung (z.B. Aufbringung der leitenden Schichten) zugeführt oder einfach aufgewickelt zu werden.

Wie immer aber die Anordnung am rechten Ende der Fig.2 ausgebildet ist, wird sie zweckmässig so ausgebildet, dass die Isolierschicht dazwischen unter Zugspannung gehalten wird, weil damit das Perforieren erleichtert wird. Das Perforieren kann auf verschiedene Weise, beispielsweise auch durch einen Stanzvorgang erfolgen, doch stellt die geforderte Kleinheit der Lochdurchmesser eine erhebliche Schwierigkeit dar. Ausserdem stellen derartige Resonanzetiketten Massenartikel dar, die entsprechend billig hergestellt werden müssen. Deshalb hat es sich als besonders einfach und günstig erwiesen, wenn zum Perforieren eine Messer-, bzw. Nadelwalze 16 verwendet wird.

Die Messer- und Nadelwalze 16 (der Einfachheit halber wird im Rahmen dieser Beschreibung meist von einer "Nadelwalze" gesprochen) weist eine Umfangsreihe von die Löcher 11 (Fig.1) erzeugenden Nadeln 11′ und - axial um den Abstand der Linien 25,26 versetzt - eine Reihe von Messern 11a′, die an der voraneilenden

EP 0 285 559 B1

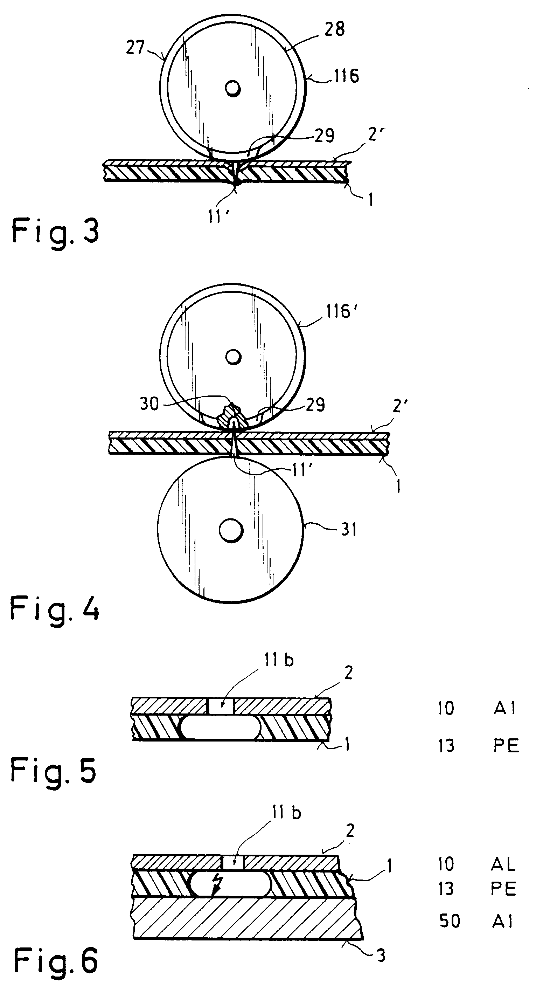

Kante eine Spitze aufweisen, mit der sie in die Isolierfolie 1 einstechen und sie dann zu einem Schlitz 11a (Fig.1) aufschneiden. Es kann aber auch zweckmässig sein, den Messern 11a′ statt der zugespitzten Form eine halbrunde zu geben. Im Falle einer nur mit Messern 11a′ bestückten Walze 16 kann es günstig sein, die Walze mit einer etwas höheren Geschwindigkeit laufen zu lassen, als dem Vorschub des Isoliermateriales 1 entspricht, so dass die Messer 11a′ die Folie richtig schlitzen. Gegebenenfalls kann eine Gegenwalze der Walze 16 an der gegenüberliegenden Seite des Isolierbandes 1 angeordnet sein, ähnlich wie dies später an Hand der Fig.4 gezeigt wird. Alternativ, und zur Erzeugung besonders feiner Löcher, kann ein Laser 17 vorgesehen sein, beispielsweise ein Rubin- oder CO2- Laser, dem beispielsweise über einen Stromkreis 18 Pumpenergie zugeführt wird. Dieser Stromkreis 18 mag zur Erzeugung von Laserblitzen für die einzelnen Löcher 11 (Fig.1) mit einer Zufuhrwalze 14 synchronisiert sein, um gleichmässige Abstände der Löcher 11 für eine Aufeinanderfolge von Etiketten zu sichern. Im übrigen ist der Laser 17 lediglich schematisch mit seinen beiden Brewsterplatten 19, einem voll verspiegelten Hohlspiegel 20 und einem teilverspiegelten Glas 21 dargestellt. Wenn der Laserstrahl erfindungsgemäss bemessen ist, durchdringt er die leitende Schicht z.B. das Aluminium nicht, sondern wird von dieser nocheinmal durch das bereits gebrannte Loch reflektiert, wodurch es zu einer zusätzlichen Erwärmung des Dielekktrikums kommt, das sodann etwas schrumpft und einen idealen Raum zum Funkenbeschlag bildet.

Es wurde bereits erwähnt, dass es zwar möglich ist, das Perforieren erst nach dem Aufbringen der leitenden Schichten 2,3 durchzuführen, dass es aber bevorzugt ist, das Loch 11 (Fig.1) nur in der Schicht 1 vorzusehen. Sieht man nur ein Loch 11 vor, dann wird dieses zweckmässig, wie in Fig.1 dargestellt, im Mittelbereich einer Kondensatorfläche 7,8 ausgebildet, da dann kleine Ungenauigkeiten in der Positionierung nicht so ins Gewicht fallen.

Dieses Positionierproblem lässt sich aber beispielsweise ganz einfach mit der von der allgemeinen Etikettentechnik bekannten Technik lösen, indem beispielsweise mit Hilfe eines Druckwerkes 22 mit Druckzylinder 23 und Farbauftragzylinder 24 ein Markie rungspunkt aufgedruckt wird, der sich mit Hilfe eines Lichtstrahles und eines dessen reflektiertes Licht aufnehmenden lichtelektrischen Wandlers in üblicher Weise leicht orten lässt. Theoretisch könnte sogar das eingebrachte Loch selbst lichtelektrisch erfasst werden, so dass es gar keiner Markierung bedarf.

Die Nadelwalze 16 wird - hinsichtlich der Breite der vorbeilaufenden Bahn 1 - an derjenigen Stelle positioniert, an der die Kondensatorplatten 7,8 liegen, bzw. später zu liegen kommen. Zweckmässig genügen die Nadeln den in den Kennzeichen der Ansprüche 4 bis 6 und 10 gegebenen Bedingungen.

Nun wird auch verständlich, dass das Positionierproblem überhaupt enfällt, wenn die Löcher 11, bzw. 11a (Fig.1) mit Hilfe einer der gezeigten Schneideinrichtungen, bzw. einer Messerwalze als Lochreihe ausgebildet werden: es ist dann nicht mehr nötig, ein einzelnes Loch genau zu orten, weil sich aus der Vielzahl von Löchern entlang der Linien 25,26 in Fig.1 automatisch ergibt, dass wenigstens ein Loch 11, bzw. 11a in den Bereich der Kondensatorplatten 7,8 und/oder von Induktor 5 und Steg 12 gelangt. Es wird lediglich zweckmässig sein, die Lochreihen 25,26 in den Bereich der Kondensatorplatten 7,8 zu legen, d.h. es wird auch vorteilhaft sein, die Schneideinrichtung, wie an Hand der Fig.2 gezeigt, in Längsrichtung des Etikettenbandes arbeiten zu lassen.

In Fig.3 ist die Situation zu einem späteren Zeitpunkt des Herstellungsverfahrens für die Resonanzetikette dargestellt. Die den Vorschub besorgenden Rollen 13,14 sind weggelassen, ebenso eine der Nadelwalze 116 gegebenenfalls gegenüberliegende Gegenrolle.

Im dargestellten Herstellungsstadium ist die Isolierschicht 1 bereits mit einer Aluminiumschicht 2′ (oder einer Schicht aus einem anderen leitenden Material) bedeckt, die zur Schicht 2 mit dem aus Fig.1 ersichtlichen Muster werden soll. Zu diesem Zweck ist es üblich, den für das Muster nicht benötigten Flächenteil der Schicht 2′ wegzuätzen und für diesen Aetzvorgang die Schicht 2′ an denjenigen Stellen mit einem Photoresistlack zu bedrucken, an denen die Schicht 2′ erhalten bleiben soll.

Die Walze 116 besorgt nun in einem einzigen Arbeitsgang beides, d.h. sie ist als Druckwalze mit erhabenen Stellen 27 entsprechend dem aus Fig.1 ersichtlichen Muster, und mit vertieften Stellen 28 dazwischen versehen. Es versteht sich, dass diese Darstellung rein schematisch ist, wobei die Walze kleiner als in Realität, die Schichten 1,2′ hingegen relativ vergrössert sind. Diese Druckwalze 116 ist nun an einer Stelle mit einer erhabenen Stelle 29 versehen, die dazu dient, eine entsprechende Fläche der Schicht 2′ mit Photoresistlack zu bedrucken, die nach dem Aetzen die Kondensatorplatte 7 (Fig. 1) ergeben soll. Gerade im Bereich dieser Erhebung 29 besitzt die Walze 116 eine Nadel 11′ oder ein anderes Lochwerkzeug (z.B. ein Messer 11a′), so dass gesichert ist, dass das von der Nadel 11′ erzeugte Loch, ohne zusätzliche Massnahmen, an die richtige Stelle kommt.

Beim Eindringen der Nadel 11′ in die Schichten 2′ und 1 wird die Schicht 2′ im Lochbereich in der dargestellten Weise etwas in das Loch hineingezogen. Bei frischer, spitzer Nadel 11′ wird dies kaum der Rede wert sein, es kann aber im Laufe der Arbeit grössere Ausmasse annehmen, die dann nicht mehr tolerierbar sind.

5

Fig.4 zeigt nun eine Möglichkeit, wie das Einziehen von leitender Folie in das Loch vermieden werden kann. Dabei besitzt die der Walze 116 entsprechende Walze 116' an Stelle einer Nadel 11' eine Vertiefung 30. Dagegen ist eine der Walze 116' gegenüberliegende Gegenwalze 31 (die normalerweise vorgesehen, und in den anderen Figuren nur der Einfachheit halber weggelassen ist), die die Nadel 11', bzw. das Lochwerkzeug trägt. Beide Walzen 31,116' sind synchron miteinander angetrieben, so dass bei jeder Umdrehung der Nadel 11' die Vertiefung 30 der Walze 116' gegenüberliegt und die Nadel 11' darin eindringen kann, wenn sie die Schichten 1,2' durchdringt.

In Fig. 5 ist eine Fertigungsstufe zu sehen, bei der das Loch (11b) mittels warmer Nadel gestanzt wurde, so dass die Schicht 1 aus Polyäthylen zurückgeschrumpft ist und, wie aus Fig.6 ersichtlich, die leitenden Schichten 2 und 3 gegenüber liegen, obwohl auch die leitende Schicht 2 durchstossen ist, wodurch die Funkenbildung erleichtert ist.

Im Rahmen der Erfindung liegt weiters ein Verfahren, bei dem eine Dielektrikumsschicht bei deren Herstellung bereits gelocht wird und bei der erst danach beidseitig die leitenden Schichten aufgebracht wwerden.

## Patentansprüche

1. Resonanzetikette mit einem folienförmigen Träger, der mit einer leitenden, zur Ausbildung eines Induktors und eines Kondensators gemusterten Schicht versehen ist, wobei der leitenden Schicht wenigstens in einem Teilbereich eine weitere leitende, durch eine Isolierschicht getrennte Schicht gegenüberliegt, welche Isolierschicht zur Deaktivierung des so gebildeten Schwingkreises mindestens eine Soll-Kurzschlussstrecke aufweist, dadurch gekennzeichnet, dass die Soll-Kurzschlussstrecke von wenigstens einem durchgehenden Schnitt oder Loch (11) in der Isolierschicht (1) gebildet ist.

2. Etikette nach Anspruch 1, dadurch gekennzeichnet, dass wenigstens eines der folgenden Merkmale vorgesehen ist:

a) die Isolierschicht (1) ist von der Trägerschicht selbst gebildet;

b) wenigstens ein durchgehendes Loch (11) ist im Bereiche der von der als Dielektrikum dienenden Isolierschicht (1) getrennten Kondensatorplatten (7,8) ausgebildet, vorzugsweise in deren Mittelbereich;

c) die Isolierschicht besteht aus, insbesondere doppeltgerecktem, Polypropylen oder Polystyrol.

d) die Isolierschicht besteht aus Polyäthylen mit einer Dicke von 9 bis 17 µm vorzugsweise 13 µm.

3. Etikette nach Anspruch 1 oder 2, dadurch gekennzeichnet, dass wenigstens ein durchgehendes Loch (11) vorzugsweise 2 bis 3 Löcher (11) pro Resonanzetikette vorgesehen ist, bzw. sind, das bzw. die gegebenenfalls nur in der Isolierschicht (1) ausgebildet ist, bzw. sind, so dass wengistens eine der leitenden Schichten (2,3) von einer Durchlochung im Lochbereich der Isolierschicht (1) frei ist.

4. Etikette nach einem der vorhergehenden Ansprüche, dadurch gegekennzeichnet, dass wenigstens eine - zumindest dem Bereich der Kondensatorplatte (7,8) überschreitende - Reihe von Löchern (11) vorgesehen ist, wobei der Lochabstand kleiner ist als die Erstreckung der Kondensatorplatte (7,8) in der Richtung der Lochreihe.

5. Etikette nach Anspruch 4, dadurch gekennzeichnet, dass zwei - vorzugsweise gegeneinander versetzte - Lochreihen vorgesehen sind, deren Abstand kleiner ist als die Erstreckung der Kondensatorplatte (7,8) senkrecht zur Richtung der Lochreihe.

6. Etikette nach einem der vorhergehenden Ansprüche, dadurch gekennzeichnet, dass die Lochfläche weniger als 0,75 mm2, insbesondere maximal 0,03 mm2, bevorzugt 0,0003 bis 0,0006 mm2, wobei die Diagonale zweckmässig 10 bis 20 µm beträgt.

7. Verfahren zum Herstellen einer Etikette nach einem der Ansprüche 1 bis 6, bei dem zumindest zwei leitende Schichten zu beiden Seiten einer Isolierschicht aufgebracht werden und die Isolierschicht mit einer Soll-Kurzschlussstrecke ausgebildet wird, dadurch gekennzeichnet, dass zur Erzielung der Soll-Kurzschlussstrecke zumindest ein durchgehendes Loch in die Isolierschicht eingebracht wird.

8. Verfahren nach Anspruch 7, dadurch gekennzeichnet, dass das Loch vor dem Aufbringen wenigstens der zweiten leitenden Schicht über dem Loch in die Isolierschicht eingebracht wird.

9. Verfahren nach Anspruch 7 oder 8, dadurch gekennzeichnet, dass die Isolierschicht (1) während des Einbringens des Loches unter Zugspannung gehalten wird.

10. Verfahren nach einem der Ansprüche 7 bis 9, dadurch gekennzeichnet, dass zum Einbringen des Loches eine Nadelwalze verwendet wird, die über den Umfang wenigstens eine, vorzugsweise zwei gegeneinander versetzte Nadelreihen trägt, und wobei der Abstand zweier Nadeln (11) auf dem Umfang der Nadelwalze (16) vorzugsweise kleiner ist, als die Länge der Kondensatorplatte (7,8) in Abrollrichtung der Nadelwalze (16), bzw. der Abstand der beiden Nadelreihen auf der Nadelwalze (16) in axialer Richtung vorzugsweise kleiner ist, als die Breite der Kondensatorplatte (7,8) - senkrecht zur Abrollrichtung der Nadelwalze (16) gesehen.

11. Verfahren nach einem der Ansprüche 7 bis 9, dadurch gekennzeichnet, dass zum Einbringen des Loches (11) bzw. der Löcher (11) eine Stanzpresse mit zumindest einem Nadelwerkzeug vorgesehen ist, die vorzugsweise gleichzeitig die einzelnen Resonanzetiketten aus einer Folienbahn stanzt.

12. Verfahren nach Anspruch 10 oder 11, dadurch gekennzeichnet, dass zumindest die Nadeln 11' der Nadelwalze (16) oder des Nadelwerkzeuges während des Lochens auf einer Temperatur von 290 bis 350 Grad C, vorzugsweise 310 bis 330 Grad C gehalten sind, und dass die Nadeln 11' vorzugsweise mit einer wärmebeständigen Gleitschichte z.B. Teflon beschichtet sind.

13. Verfahren nach einem der Ansprüche 7 bis 9, dadurch gekennzeichnet, dass zum Einbringen des Loches zumindest ein vorzugsweise digital gesteuerter Laserstrahl verwendet wird, der die leitende Schicht (2,3) bzw. die Kondensatorplatten (7,8) nicht zu durchdringen vermag.


## Claims

1. A resonance label having a foil-like base which is provided with a conducting layer shaped to form an inductor and a capacitor, at least part of the conducting layer being opposite a further conducting layer separated by an insulating layer, which insulating laye has at least one nominal short-circuit zone for the deactivation of the oscillating circuit thus formed, wherein the nominal short-circuit zone is formed by at least one continuous cut or hole (11) in the insulating layer (1).

2. A label as claimed in claim 1, wherein at least one of the following features is provided:
a) the insulating layer (1) is formed by the base layer itself;
b) at least one continuous hole (11) is formed in the region of the capacitor plates (7, 8) which are separated by the insulating layer (1) serving as the dielectric, preferably in its central region;
c) the insulating layer consists of polypropylene or polystyrene, in particular doubly oriented polypropylene or polystyrene;
d) the insulating layer consists of polyethylene having a thickness of from 9 to 17 $\mu$m, preferably 13 $\mu$m.

3. A label as claimed in claim 1 or 2, wherein at least one continuous hole (11), preferably 2 or 3 holes (11), is or are provided per resonance label, which hole or holes may be formed only the insulating layer (1), so that at least one of the conducting layers (2, 3) is free from perforation in the hole area of the insulating layer (1).

4. A label as claimed in any of the preceding claims, wherein at least one row of holes (11) - which at least exceeds the area of the capacitor plate (7, 8) - is provided, the hole spacing being smaller than the dimension of the capacitor plate (7, 8) in the direction of the row of holes.

5. A label as claimed in claim 4, wherein two rows of holes - preferably offset with respect to one another - are provided, the distance between the said rows being smaller than the dimension of the capacitor plate (7, 8) at right angles to the direction of the row of holes.

6. A label as claimed in any of the preceding claims, wherein the hole area is less than 0.75 mm$^2$, in particular not more than 0.03 mm$^2$, preferably 0.0003 to 0.0006 mm$^2$, the diagonal expediently being 10 to 20 $\mu$m.

7. A process for the production of a label according to any of claims 1 to 6, in which at least two conducting layers are applied to both sides of an insulating layer, and the insulating layer is provided with a nominal short-circuit zone, wherein at least one continuous hole is made in the insulating layer to achieve the nominal short-circuit zone.

8. A process as claimed in claim 7, wherein the hole is made prior to application of at least the second conducting layer over the hole in the insulating layer.

9. A process as claimed in claim 7 or 8, wherein the insulating layer (1) is kept under tension while the hole is being made.

10. A process as claimed in any of claims 7 to 9, wherein the hole is made using a needle roll which carries at least one row of needles, preferably two rows of needles offset from one another, over the periphery, and the distance between two needles (11) on the periphery of the needle roll (16) is preferably smaller than the length of the capacitor plate (7, 8) in the rolling direction of the needle roll (16) and the distance between the two rows of needles on the needle roll (16) in the axial direction is preferably smaller than the width of the capacitor plate (7, 8)- viewed at right angles to the rolling direction of the needle roll (16).

11. A process as claimed in any of claims 7 to 9, wherein the hole (11) or the holes (11) is or are made using a punch press which has at least one needle tool and preferably simultaneously punches the individual resonance labels from a foil web.

12. A process as claimed in claim 10 or 11, wherein at least the needle 11' of the needle roll (16) or of the needle tool are kept at a temperature of 290 to 350 °C, preferably 310 to 330 °C, during perforation, and the needles 11' are preferably coated with a heat-resistant sliding layer, for example teflon.

13. A process as claimed in any of claims 7 to 9, wherein the hole is made using at least one laser beam which is preferably digitally controlled and is incapable of penetrating the conducting layer (2, 3) or the capacitor plates (7, 8).

**Revendications**

1. Etiquette résonante avec un support en forme de feuille mince, qui est pourvue d'une couche conductrice façonnée en vue de la formation d'un inducteur et d'un condensateur, une autre couche conductrice faisant face à la première dans au moins une région partielle, et les deux couches conductrices étant séparées par une couche isolante qui présente, pour la désactivation du circuit oscillant ainsi formé, au moins un trajet de court-circuit obligé, caractérisée en ce que le trajet de court-circuit obligé est formé par au moins une coupure passant de part en part, ou par un trou (11) dans la couche isolante (1),

2. Etiquette suivant la revendication 1, caractérisée en ce qu'est prévue au moins l'une des particularités suivantes :
a) la couche isolante (1) est formée par la couche porteuse elle-même ;
b) au moins un trou (11) passant de part en part est formé dans la région des plaques de condensateur (7,8) séparées par la couche isolante (1) semant de diélectrique, de préférence dans sa région centrale ;
c) la couche isolante est faite de polypropylène ou de polystyrène, en particulier de polypropylène ou de polystyrène doublement étiré ;
d) la couche isolante est faite de polyéthylène avec une épaisseur de 9 à 17 μm, de préférence de 13 μm.

3. Etiquette suivant la revendication 1 ou la revendication 2, caractérisée en ce qu'est prévu au moins un trou (11) passant de part en part, de préférence deux à trois trous (11) par étiquette résonante, ce trou ou ces trous étant formé(s) éventuellement dans la couche isolante (1) seulement, en sorte qu'au moins une des couches conductrices (2,3) est exempte d'une perforation dans la région des trous de la couche isolante (1).

4. Etiquette suivant l'une des revendications précédentes, caractérisée en ce qu'est prévue au moins une série de trous (11) - tout au moins recouvrant la région de la plaque de condensateur (7,8) -, la distance entre trous étant plus petite que l'étendue de la plaque de condensateur (7,8) dans la direction de la série de trous.

5. Etiquette suivant la revendication 4, caractérisée en ce que sont prévues deux séries de trous - de préférence décalées l'une par rapport à l'autre - , dont la distance est plus petite que l'étendue de la plaque de condensateur (7,8) perpendiculairement à la direction de la série de trous.

6. Etiquette suivant l'une des revendications précédentes, caractérisée en ce que la surface des trous est inférieure à 0,75 mm$^2$ , en particulier au maximum de 0,03 mm$^2$, de préférence de 0,0003 à 0,0006 mm$^2$ , la diagonale étant judicieusement de 10 à 20 μm.

7. Procédé de fabrication d'une étiquette suivant l'une des revendications 1 à 6, dans lequel au moins deux couches conductrices sont appliquées aux deux faces d'une couche isolante et où la couche isolante est conformée avec un trajet de court-circuit obligé, caractérisé en ce que, pour obtenir le trajet de court-circuit obligé, on pratique au moins un trou passant de part en part dans la couche isolante.

8. Procédé suivant la revendication 7, caractérisé en ce que le trou est pratiqué dans la couche isolante avant l'application d'au moins la deuxième couche conductrice au-dessus du trou.

9. Procédé suivant la revendication 7 ou la revendication 8, caractérisé en ce que la couche isolante (1) est maintenue sous tension de traction pendant le perçage du trou.

10. Procédé suivant l'une des revendications 7 à 9, caractérisé en ce que, pour percer le trou, on utilise un cylindre à aiguilles qui porte à son pourtour au moins une série d'aiguilles et de préférence deux séries d'aiguilles décalées l'une par rapport à l'autre, et où la distance entre deux aiguilles (11) sur le pourtour du cylindre à aiguilles (16) est de préférence plus petite que la longueur de la plaque de condensateur (7,8) , dans la direction de déroulement du cylindre à aiguilles (16), où, respectivement, la distance des deux séries d'aiguilles du cylindre à aiguilles (16), en direction axiale, est de préférence plus petite que la largeur de la plaque de condensateur (7,8) considérée perpendiculairement à la direction de déroulement du cylindre à aiguilles (16),

11. Procédé suivant l'une des revendications 7 à 9, caractérisé en ce que, pour percer le trou (11) ou les trous (11), on a prévu une presse à poinçonner avec au moins un outil formant aiguille qui, de préférence, estampe en même temps les différentes étiquettes résonantes à partir d'une nappe de feuille mince.

12. Procédé suivant la revendication 10 ou la revendication 11, caractérisé en ce qu'au moins les aiguilles (11') du cylindre à aiguilles (16) ou de l'instrument à aiguilles , sont maintenues, pendant le perçage du trou, à une température de 290 à 350°C, de préférence de 310 à 330°C, et en ce que les aiguilles (11') sont recouvertes de préférence d'une couche de glissement résistant à la chaleur, par exemple de Teflon.

13. Procédé suivant l'une quelconque des revendications 7 à 9, caractérisé en ce que, pour percer le trou, on emploie au moins un rayon laser, de préférence à commande numérique, quine peut pas traverser la couche conductrice (2,3), respectivement les plaques de condensateur (7,8).

Fig.1

Fig.2

Fig. 3

Fig. 4

Fig. 5

| 10 | A1 |
| 13 | PE |

Fig. 6

| 10 | AL |
| 13 | PE |
| 50 | A1 |